# EUROPÄISCHE PATENTSCHRIFT

(11) **EP 0 868 646 B1**
(45) Veröffentlichungstag und Bekanntmachung des Hinweises auf die Patenterteilung: **16.04.2003**
(21) Anmeldenummer: 96946183.9
(22) Anmeldetag: 10.12.1996
(51) Int. Cl.: G01B 7/06

(54) **BESTIMMUNG DER DICKE EINER ELEKTRISCH LEITFÄHIGEN SCHICHT**
DETERMINING THE THICKNESS OF AN ELECTRICALLY CONDUCTIVE LAYER
DETERMINATION DE L'EPAISSEUR D'UNE COUCHE ELECTROCONDUCTRICE

(30) Priorität: 22.12.1995 DE 19548508
(43) Veröffentlichungstag der Anmeldung: 07.10.1998
(73) Patentinhaber: SIEMENS AKTIENGESELLSCHAFT, 80333 München (DE)
(72) Erfinder: BECKER, Erich, D-45772 Marl (DE)
(86) Internationale Anmeldenummer: DE9602383
(87) Internationale Veröffentlichungsnummer: WO97023762

(56) Entgegenhaltungen:
- DE-A- 3 335 080
- FR-A- 2 534 015
- US-A- 5 430 376
- VDE KRAFTWERKSTECHNIK , Bd. 70, Nr. 9, - 1990 Seiten 645-661, XP000675998 G.DIBELIUS ET AL: "Non-destructive testing of corrosion effect on high-temperature protective coatings ; concluding report of the VGB research project no.54" in der Anmeldung erwähnt
- REVIEW OF SCIENTIFIC INSTRUMENTS, Bd. 63, Nr. 6, 1.Juni 1992, Seiten 3455-3465, XP000301850 MOULDER J C ET AL: "THICKNESS AND CONDUCTIVITY OF METALLIC LAYERS FROM EDDY CURRENT MEASUREMENTS"
- MEASUREMENT TECHNIQUES, Bd. 36, Nr. 9, 1.September 1993, Seite 997/998 XP000456854 SILKIN V YA ET AL: "MEASUREMENT OF COATING THICKNESS BY THE EDDY-CURRENT METHOD"

## Beschreibung

Die Erfindung betrifft ein Verfahren und eine Anwendung zur Bestimmung der Dicke einer elektrisch leitfähigen Schutzschicht eines Bauteils einer Turbinenanlage, die eine elektrische Leitfähigkeit κ₁ hat und auf einem Grundwerkstoff mit der elektrischen Leitfähigkeit κ₂ aufgebracht ist, wobei die elektrischen Leitfähigkeiten voneinander verschieden sind.

In dem Artikel "Non-distructive Testing of Corrosion Effect on High-temperature Protective Coatings" in VGB-Kraftwerkstechnik 70 (1990), Nr. 9, S. 645 bis 651, von G. Dibelius, H.J. Krichel und U. Reimann, sind verschiedene Verfahren zur Bestimmung der Schichtdicke einer Korrosionsschutzschicht für eine Gasturbinenschaufel beschrieben. Eines der beschriebenen Verfahren ist das sogenannte "Wirbelstrom-Meßverfahren", bei dem die unterschiedlichen elektrischen Leitfähigkeit der Schutzschicht und des Grundwerkstoffes ausgenutzt werden. Ober eine flache spiralförmige Sonde aus Kupfer, welche auf einem biegsamen Träger, beispielsweise als gedruckte Leiterbahn aufgebracht ist, wird ein Wirbelstrom in der Gasturbinenschaufel induziert. Hierzu wird die Sonde mit einem hochfrequenten elektrischen Wechselstrom beaufschlagt und die Impedanz der Sonde aufgezeichnet. Bei einer festen Frequenz des elektrischen Wechselstroms ergibt sich in Abhängigkeit der Dicke der Schicht, des Materials der Schicht und des Materials des Grundwerkstoffs *ein* charakteristischer Wert der Impedanz. In dem Artikel sind Schichtdicken für eine Schutzschicht aus einer Platin-Aluminium-Legierungen auf einem Grundwerkstoff, einem rostfreiem Stahl IN 738 LC, in Abhängigkeit der Impedanz untersucht worden. Es wurden bei einer Frequenz von 200 kHz sowie 500 kHz die Impedanz von Schichtdicken bis zu 1 mm ausgemessen. Der Artikel enthält allerdings weder eine Angabe über die Werte oder des Verhältnis der elektrischen Leitfähigkeiten noch über die Genauigkeit und Reproduzierbarkeit der Messung an Gasturbinenschaufeln mit einer unbekannten, zu bestimmenden Dicke der Schicht.

In der DE 33 35 080 A1 ist ein Verfahren zur Bestimmung der Dicke einer Zirkonbeschichtung an der Innenseite eines Zirkoniumlegierungsrohres für Kernreaktor-Brennstoffelemente beschrieben. Das Bestimmungsverfahren greift auf das Wirbelstromprüfprinzip zurück, in dem die Impedanzänderung eine Aufnahmespule durch ein in der Zirkonbeschichtung hervorgerufenes hochfrequentes Wirbelstromfeld ausgewertet wird. Die Frequenz für das hochfrequente Wirbelstromfeld wird derart ausgewählt, daß eine auf das sogenannte Abheben der Erregerspule zurückzuführende Impedanzänderung von einer Impedanzänderung aufgrund der Schichtdicke deutlich unterscheidbar ist. Hierzu geeignete Frequenzen liegen in einem Bereich oberhalb von 6 Mhz bis 20 Mhz. Die Dicke der Zirkoniumschicht reicht von einigen 10 µm bis etwa 100 µm und der spezifische Widerstand der Zirkoniumschicht liegt bei ca. 40 * 10⁻⁸ Ω/m sowie der spezifische Widerstand des Grundmetalls, der Zirkonlegierung, bei ca. 74 * 10⁻⁸ Ω/m. Die Leitfähigkeit der Zirkoniumschicht ist mithin etwa doppelt so groß wie die Leitfähigkeit des Grundmetalls. Mit dem beschriebenen Wirbelstrom-Prüfverfahren für Anwendungen auf dem Gebiet der Kerntechnik soll eine Bestimmung der Zirkonschichtdicke mit einer Abweichung von etwa 5 µm Genauigkeit durchführbar sein.

Aufgabe der Erfindung ist es, ein Verfahren zur Bestimmung der Schichtdicke einer elektrisch leitfähigen Schicht, die eine elektrische Leitfähigkeit κ₁ hat und auf einem Grundwerkstoff mit der elektrischen Leitfähigkeit κ₂ aufgebracht ist, wobei die elektrischen Leitfähigkeiten κ₁ und κ₂ voneinander verschieden sind, anzugeben, bei dem selbst bei annähernd gleichen elektrischen Leitfähigkeiten eine sichere Bestimmung der Schichtdicke gewährleistet ist.

Die auf ein Verfahren gerichtete Aufgabe wird dadurch gelöst, daß eine von einem hochfrequenten elektrischen Strom durchflossene Erregerspule der Schicht angenähert wird, so daß in der Schicht und dem darunterliegenden Grundwerkstoff ein elektrischer Wirbelstrom erzeugt wird, wobei die Frequenz des hochfrequenten elektrischen Stroms so gewählt wird, daß eine der Impedanz einer Prüfspule zugeordnete Größe bestimmt wird, welche Größe nach dem Wirbelstromprüfprinzip als Grundlage für die Bestimmung der Dicke der Schicht dient und die Frequenz so gewählt wird, daß gemäß dem Wirbelstromprüfprinzip eine eindeutige Bestimmung der Dicke der Schutzschicht bei einem Verhältnis der elektrischen Leitfähigkeiten zwischen 0.7 und 1.5 erfolgt. Eine Anwendung ist mit Anspruch 9 gegeben.

Hierbei können, wie beispielsweise in dem Buch "Schichtdikkenmessung" von D. Herrmann, R. Oldenbourg Verlag, München, 1993, Abschnitt 3.6, Seiten 121 bis 159, oder dem Buch "Zerstörungsfreie Werkstück- und Werkstoffprüfung" von S. Steeb, expert verlag, Ehningen, 2.Auflage, 1993, Kapitel 8, Seiten 334 bis 370, beschrieben, die Erregerspule mit der Prüfspule zusammenfallen oder zwei unterschiedliche Spulen verwendet werden. Den obigen zwei Büchern ist auch entnehmbar, welche der Impedanz zugeordnete Größen bei Wirbelstromprüfverfahren verwendet werden, z.B. unmittelbar die Impedanz der Erregerspule oder deren Phasenwinkel, die Induktionsspannung einer Prüfspule sowie ein Differenzsignal zweier entgegengesetzt geschalteter Prüfspulen. Die Spulen können als planare Spulen oder als entlang einer Achse gewundene Spulen verwendet werden. Letztere eignen sich besonders, um ein relativ starkes Magnetfeld zu erzeugen und aufgrund ihres kleinen Querschnittes zur Abtastung gekrümmter Oberflächen. Prüfund Erregerspule können ineinander verwunden sein sowie als voneinander beabstandete Transformatorspulen angeordnet sein.

Die Eindringtiefe des Wirbelstroms in die Schicht und den darunterliegenden Grundwerkstoff liegt im Bereich der maximal zu erwartenden Dicke der Schicht. Durch eine Frequenz des hochfrequenten elektrischen Stroms, bei der die Eindringtiefe des Wirbelstroms im Bereich der maximal zu erwartende Dicke der Schicht liegt, tritt der Einfluß der Schicht besonders deutlich hervor, so daß das Verfahren selbst bei nur geringfügig sich unterscheidenden elektrischen Leitfähigkeiten mit hoher Genauigkeit eine Bestimmung der Schichtdicke gewährleistet. Die Auswahl erfolgt unter Berücksichtigung der elektrischen Leitfähigkeiten. Hierbei wird berücksichtigt, daß bei einer Frequenz, welche eine Eindringtiefe kleiner als die Dicke der Schicht bewirkt, ein Wert der Impedanz zugeordneten Größe erzeugt wird, welcher fast ausschließlich durch die elektrische Leitfähigkeit der Schicht geprägt ist. Im Folgenden wird zur Vereinfachung als Größe direkt die Impedanz selbst genannt, wobei aber jede mögliche Größe selbst verständlich anstelle der Impedanz gewählt werden kann. Ist die Frequenz so gewählt, daß die Eindringtiefe des erzeugten Wirbelstroms deutlich größer als die Dicke der Schicht ist, so kann der Einfluß der elektrischen Leitfähigkeit des Grundwerkstoffs auf die Impedanz zunehmen, wenn nicht sogar vollständig dominieren. Vor allem bei nur geringfügig voneinander verschiedenen elektrischen Leitfähigkeiten der Schicht und des Grundwerkstoffes ist eine Abhängigkeit der Impedanz von der Schichtdicke im Rahmen der Fehlergenauigkeit von Messungen unter Umständen in den beiden obigen Fällen kaum nachweisbar. Bei einer Frequenz, welche einen Wirbelstrom mit einer Eindringtiefe im Bereich der Dicke der Schicht hervorruft, ist hingegen eine signifikante, deutlich von eventuellen Meßfehlern unterscheidbare Abhängigkeit des Meßsignals, z.B. der Impedanz, von der tatsächlichen Schichtdicke gegeben. Versuche zeigten überraschenderweise, daß die hierdurch erhaltenen Meßsignale um einen Faktor von etwa 1000 höher liegen, als bei Verwendung der bisher bekannten festen Frequenzen. Das Verfahren eignet sich daher zur Bestimmung der Dicke einer Schicht bei nahezu beliebiger Geometrie, insbesondere Krümmung und Rauhigkeit der Schicht, weil die erhaltbaren Signale auch deutlich von Geometrie-Effekten unterscheidbar sind. Die elektrischen Leitfähigkeiten können sich nur geringfügig, z.B. im Bereich von etwa 10 % bis etwa 15 %, unterscheiden.

Vorzugsweise ist die Frequenz so gewählt, daß die Eindringtiefe größer als die maximal zu erwartende Dicke ist, insbesondere bis etwa dem vierfachen der maximal zu erwartenden Dicke, beträgt. Da in der Regel bereits durch das Herstellungsverfahren der Schicht, z.B. Tauchen, Spritzen, elektrolytisches Abscheiden, etc. durch die Prozeßparameter eine maximal zu erwartende Schichtdicke bekannt ist, ist eine Auswahl der Frequenz im Hinblick auf die so zu erwartende Schichtdicke einfach möglich. Hierzu ist es nicht notwendigerweise erforderlich, durch eine oder mehrere Testmessungen mit unterschiedlichen Frequenzen eine bevorzugte, der zu erwartenden Schichtdicke angepaßte, Frequenz auszuwählen. Mit der Anpassung der Frequenz an eine zu erwartenden Schichtdicke wird zudem auch für den Fall, daß über einen Zeitraum hinweg eine Abtragung der Schicht stattgefunden hat, ein hohes eindeutig unterscheidbares und auswertbares Meßsignal gewährleistet. Dies ist besonders bei thermisch belasteten und der Korrosion ausgesetzten Bauteilen, wie Gasturbinenschaufeln, von Vorteil.

Vorzugsweise liegt die Frequenz des elektrischen Stromes zwischen 1,5 MHz und 3,5 MHz, insbesondere zwischen 2 MHz und 3 MHz. Dieser Frequenzbereich ist für eine Schichtdickenbestimmung mit einer Schichtdicke von bis zu 500 µm von besonderem Vorteil. Dies trifft vor allem für eine Schicht zu, die als Korrosionsschutzschicht einer Gasturbinenschaufel dient und beispielsweise eine Nickel-Chrom-Aluminium-Legierung mit Zusatz von Yttrium aufweist. Typische Schichtdicken können im Bereich zwischen 200 µm und 400 µm liegen.

Vorzugsweise dient als Grundlage für die Bestimmung der Dicke der Schicht der Wert der Impedanz, welcher bei einem mechanischen Kontakt der Erregerspule mit der Schicht erfolgt, wobei die Erregerspule gegenüber der Schicht elektrisch isoliert ist. Die Erregerspule wie die Prüfspule sind vorzugsweise als längs einer Achse ausgedehnte Taststifte ausgeführt. Sie können jeweils einen Querscnitt von etwa 3 mm aufweisen und etwa 4 mm voneinander beabstandet sein. Gegebenenfalls sind die Spulen planar, beispielsweise als Kupfer-Leiterbahn auf einem flexiblen und deformierbaren Tragkörper aufgebracht sein. Der mechanische Kontakt zwischen Spule und Schicht kann unter Umständen dadurch verbessert werden, daß die Spule beispielsweise durch Druckluft an die Schicht angepreßt wird.

Die Auswahl der Frequenz des hochfrequenten elektrischen Stromes kann wie oben bereits ausgeführt anhand des Herstellungsprozesses sowie der äußeren Bedingungen, welcher die Schicht ausgesetzt war, bestimmt werden. Es ist ebenfalls möglich, mit einer Testmessung mit einer Testfrequenz eine grobe Bestimmung der Dicke der Schicht durchzuführen und daraus eine Frequenz zu ermitteln, die besonders hohe Meßsignale für die Impedanz gewährleistet. Auch können mehrere Testmessungen mit unterschiedlichen Testfrequenzen durchgeführt werden, wobei unter Verwendung von Optimierungs- oder Interpolationsverfahren, eine zur Durchführung des Verfahrens besonders geeignete Frequenz ermittelt werden kann.

Eine weitere bevorzugte Methode zur Bestimmung einer geeigneten Frequenz besteht darin, daß ein Satz von Probekörpern bereitgestellt wird, wobei jeder Probekörper jeweils aus einem Grundwerkstoff und einer Schicht mit jeweiliger Dicke besteht und der Probekörper vorzugsweise hinsichtlich Herstellung und Geometrie dem zu prüfenden Bauteil entspricht. Die Probekörper können hierbei Teile eines für einen Einsatz in eine Gasturbinenanlage bestimmten Bauteils, insbesondere einer Gasturbinenverdichterschaufel, sein. Es wird eine Mehrzahl von Näherungswerten für die Frequenz ausgewählt und mit diesen Näherungswerten, jeweils gegebenenfalls mehrfach bis zu zehn Mal, das Wirbelstromprüfverfahren an jedem Probenkörper durchgeführt. Aus diesen Näherungsfrequenzen wird eine besonders geeignete Näherungsfrequenz für die Anwendung des Verfahrens an ein konkretes Bauteil ausgewählt, wobei diese Näherungsfrequenz zu einer besonders hohen Auflösung bei der Ermittlung der Schichtdicke sowie zu einer besonders hohen Linearität in Abhängigkeit der Schichtdicke führt. Die Mehrzahl der Näherungsfrequenzen kann ihrerseits durch eine Auswahl aus einer Vielzahl von Testfrequenzen erfolgen, wobei mit diesen Testfrequenzen Vorprobekörper, insbesondere speziell hergestellte geometrisch einfache Körper, die mit der Schicht versehen sind, benutzt werden. Durch eine solche sukzessive Auswahl einer besonders geeigneten Frequenz unmittelbar an einem im wesentlichen zu dem zu prüfenden Bauteil äquivalenten Bauteil ist auch bei geringen Unterschieden der Leitfähigkeiten zwischen Schicht und Grundwerkstoff eine genaue Ermittlung der Schichtdicke gewährleistet.

Die in dem Verfahren ermittelte Impedanz einer Spule wird vorzugsweise mit Referenzwerten verglichen und daraus die Dicke der Schicht bestimmt. Die Referenzwerte können anhand von Referenzbeschichtungen mit einem exakten Nachweis der Dicke der Schicht, beispielsweise durch Aufschneiden der Schicht oder ähnlichem, durchgeführt werden. Anhand einiger weniger oder einer Vielzahl von Referenzwerten der Impedanz für eine Schicht aus einem bekannten Material, die auf einen bekannten Grundwerkstoff aufgebracht ist, kann mittels Interpolationsverfahren eine Schar von Referenzwerten der Impedanz mit einer jeweils eindeutig zugeordneten Dicke der Schicht ermittelt werden.

Vorzugsweise eignet sich das Verfahren zur Bestimmung der Dicke einer Schutzschicht auf einem Bauteil einer Gasturbinenanlage, insbesondere bei einer Gasturbinenschaufel oder einer Verdichterschaufel. Dies vor allem, da selbst die komplexe Geometrie des Bauteiles, gegebenenfalls vorhandene Bohrungen unter der Oberfläche der Schicht sowie Schwankungen in der Dicke der Schicht und der Dicke des Grundwerkstoffs allenfalls einen geringen Einfluß besitzen.

Die Schutzschicht kann aus einer Legierung der Art MCrAlY bestehen, worin M für eines der Metalle Eisen, Nickel und/oder Kobald oder einer Legierung daraus, Cr für Chrom, Al für Aluminium und Y für Yttrium, Hafnium oder einem ähnlichen Metall steht. Die Schutzschicht kann weitere Elemente wie Rhenium oder Gallium enthalten. Beispielsweise weist die Legierung in Gewichtsprozent folgende Komponenten auf: 30% - 32% Co, 30% Ni, 28% - 30% Cr, 7% - 9% Al, 0,5% Y sowie ca. 0,7% Si.

Das Verfahren liefert gegenüber Verfahren mit unveränderlicher Frequenz im Bereich von 200 KHz bis 500 KHz auch eindeutige und genaue Ergebnisse für die Dicke der Schutzschicht, wenn das Verhältnis der Leitfähigkeit des Grundwerkstoffes zu der Leitfähigkeit der Schicht zwischen 0.3 und 3.0, insbesondere zwischen 0.7 und 1.0, liegt. Solche Verhältnisse nahe 1 liegen beispielsweise bei einer obengenannten Schutzschicht und einem rostfreiem Stahl, beispielsweise IN 738 LC vor. Das Verhältnis der Leitfähigkeiten beträgt in diesem Fall ungefähr 0,79. Die Dicke der Schutzschicht liegt bei einer neubeschichteten Gasturbinenschaufel in einem Bereich von bis zu etwa 400 µm.

Anhand der Ausführungsbeispiele der Zeichnung werden das Verfahren sowie die Vorrichtung zur Bestimmung der Dicke einer auf einem Grundwerkstoff aufgebrachten Schicht näher erläutert. Es zeigen in schematischer nicht maßstäblicher Darstellung:
- FIG 1: eine Vorrichtung zur Durchführung des Verfahrens sowie ein Bauteil mit einem Grundwerkstoff und einer darauf aufgebrachten Schicht,
- FIG 2: eine Darstellung der Impedanz in der komplexen Ebene für verschiedene Werkstoffe und
- FIG 3: eine Darstellung der Impedanz in der komplexen Ebene für eine Mehrzahl von Schutzschichten unterschiedlicher Dicke einer Gasturbinenschaufel.

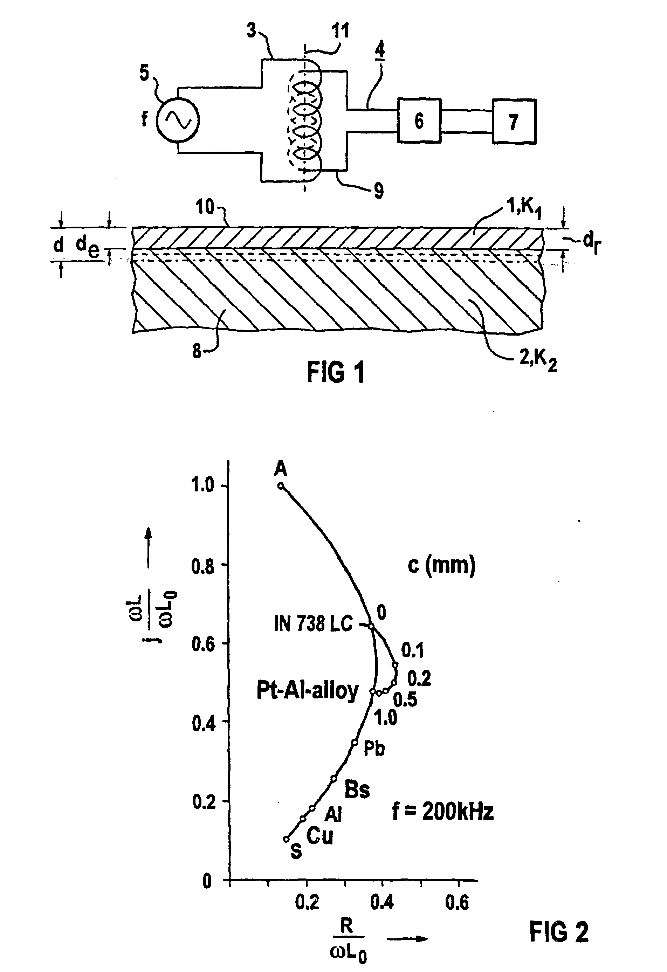

FIG 1 zeigt einen Ausschnitt eines Bauteils 8 in einem Längsschnitt sowie schematisch und nicht maßstäblich hierzu eine Vorrichtung 4 zur Bestimmung der Dicke einer Schicht 1 des Bauteils 8. Die Schicht 1 ist auf einen Grundwerkstoff 2 des Bauteils 8 aufgebracht und hat eine Dicke dᵣ. Die Schicht 1 besteht aus einem elektrisch leitfähigen Material, beispielsweise einer Korrosionsschutzschicht einer Gasturbinenverdichterschaufel. Der Grundwerkstoff 2 ist ebenfalls elektrisch leitfähig und besteht beispielsweise aus einem rostfreiem Stahl, wie IN 738 LC. Die Vorrichtung 4 weist eine im wesentlichen entlang einer Achse 11 schraubenförmig gewundene Erregerspule 3 auf. Die Erregerspule 3 ist mit einer Wechselstromquelle 5 verbunden, so daß durch die Erregerspule 3 ein hochfrequenter elektrischer Wechselstrom mit einer Frequenz f einspeisbar ist. Die Erregerspule 3 ist galvanisch mit einer ebenfalls entlang der Achse 11 gewundenen Prüfspule 9 gekoppelt. Die Prüfspule 9 ist mit einer Meßeinheit 6 zur Bestimmung der Impedanz oder einer der Impedanz zugeordneten Größe, wie Induktionsspannung oder Phasenwinkel, der Errgerspule 3 bzw. der Prüfspule 9 verbunden. Die Meßeinheit 6 ist mit einer Auswerteeinheit 7 zur Bestimmung der Dicke dᵣ verbunden. In der Meßeinheit 6 wird ein der Impedanz der Erregerspule 3 eindeutig zugeordnetes Meßsignal bzw. die Impedanz selbst aufgenommen. Die der Impedanz zugeordnete Größe wird in der Auswerteeinheit 7 mit darin gespeicherten Referenzwerten verglichen. Diese Referenzwerte sind bei gleicher Materialkombination zwischen Schicht und Grundwerkstoff für Schichten wohldefinierter Dicke ermittelt worden. Da die Referenzwerte eindeutig einer Dicke einer äquivalenten Schicht zugeordnet sind, folgt durch den Vergleich eine genaue Bestimmung der Dicke dᵣ der Schicht 1. Bei einer Materialkombination derart, daß die Schicht 1 eine Korrosionsschicht für eine Gasturbinenschaufel und der Grundwerkstoff 2 ein rostfreier Stahl IN 738 LC ist, erfolgt bei einer zu erwartenden Schichtdicke zwischen 200 µm und 500 µm eine Beaufschlagung der Erregerspule mit einem elektrischen Wechselstrom in einem Frequenzbereich zwischen 2 MHz und 2,5 MHz. Bei Durchführung des Verfahrens wird die von dem hochfrequenten Wechselstrom durchflossene Erregerspule 3 der Schicht 1 angenähert und mit dieser in mechanischen Kontakt gebracht sowie durch die Meßeinheit 6 ein entsprechendes der Impedanz eindeutig zugeordnetes Meßsignal aufgenommen und in der Auswerteeinheit 7 zur Bestimmung der Dicke dᵣ der Schicht 1 weiter verarbeitet. Durch den hochfrequenten Wechselstrom der Erregerspule 3 wird in dem Bauteil 8 ein Wirbelstrom erzeugt, welcher von der Oberfläche 10 der Schicht 1 in das Bauteil 8 hinein abnimmt. Die Eindringtiefe d des Wirbelstroms ist vorzugsweise geringfügig größer eine zu erwartende Schichtdicke dₑ, von etwa 500 um oder weniger. Hierdurch ist der Einfluß des Sprungs der elektrischen Leitfähigkeit zwischen Schicht 1 und Grundwerkstoff 2 an der Grenzfläche zwischen der Schicht 1 und dem Grundwerkstoff 2 von besonderer Bedeutung für das in der Meßeinheit 6 aufgenommene Meßsignal. Durch den großen Einfluß des Sprunges zwischen der elektrischen Leitfähigkeit (κ₁,κ₂) zwischen Schicht 1 (κ₁) und Grundwerkstoff 2 (κ₂) auf das Meßsignal kann auch bei sich nur geringfügig unterscheidenden elektrischen Leitfähigkeiten eine eindeutige Zuordnung und Bestimmung der Dicke dᵣ der Schicht 1 erfolgen. Je nach Anwendungsfall, insbesondere Kombination der Materialien für die Schicht 1 und den Grundwerkstoff 2 sowie der zu erwartenden Dicke der Schicht 1 kann eine jeweils entsprechende Frequenz f für den hochfrequenten elektrischen Wechselstrom der Erregerspule 3 bestimmt werden.

FIG 2 zeigt eine Darstellung der Impedanz der Erregerspule 3 in der imaginären Ebene mit dem Realteil entlang der Abszisse und dem Imaginärteil entlang der Ordinate aufgetragen. Die dargestellte Kurve beginnt in dem mit "A" gekennzeicheten Punkt und verläuft bis zu einem mit "S" gekennzeichneten Punkt. Im Punkt A ist die Impedanz für einen offenen Stromkreis, d.h. im wesentlichen der Wert der Impedanz bei einer Messung in Luft dargestellt. Der Wert im Punkte S entspricht einem idealen kurzgeschlossenen Stromkreis. Die dazwischenliegenden Werte entsprechen der jeweiligen Impedanz, die bei einem Kontakt der Erregerspule 3 mit einem durchgehend aus einem einzigen Material, insbesondere Metall, bestehenden Grundwerkstoff vorliegt. Hervorgehoben sind durch jeweilige Punkte die Werte für den rostfreien Stahl IN 738 LC und einer Platin-Aluminium-Legierung. Diese beiden Punkte sind durch eine weitere Linie verbunden, welche den Übergang von einem einkomponentigen Material aus IN 738 LC auf ein zweikomponentiges Material mit einer Schicht der Platin-Aluminium-Legierung aufgetragen auf dem rostfreien Stahl angibt. Die Dicke der Schicht steigt in Pfeilrichtung an, wobei die angegebenen Zahlen den Wert der Schicht in Millimeter darstellen. Ab einer gewissen Schichtdicke, die über 1 mm liegt, wird ein Wert der Impedanz erreicht, der den Wert eines einkomponentigen Materials aus der Platin-Aluminium-Legierung entspricht. Die Impedanzwerte wurden bei einer Frequenz von 200 KHz gemessen und sind dem Artikel "Non-distructive Testing of Corrosion Effect on High-temperature Protective Coatings" in VGB-Kraftwerkstechnik 70 (1990), Nr. 9, Seiten 645 bis 651, von G. Dibelius, H.J. Krichel und U. Reimann, entnommen.

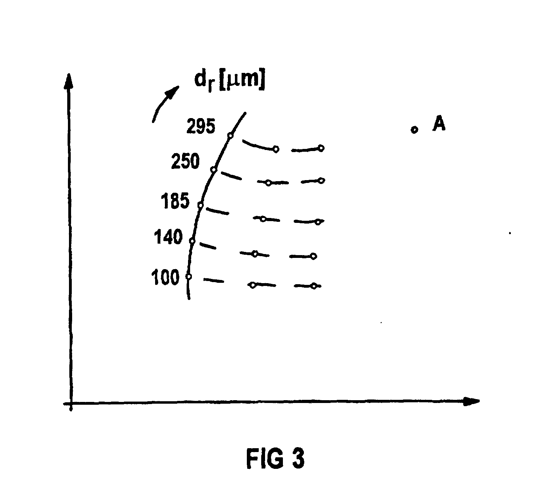

FIG 3 zeigt schematisch den Verlauf der Impedanz, ebenfalls in der komplexen Ebene. Die Darstellung erfolgt hier so, daß der Wert der Impedanz bei einem offenen Stromkreis deutlich im ersten Quadranten, d.h. bei positivem Imaginär- und Realteil, liegt. Die Werte wurden ermittelt an einer Korrosionsschutzschicht mit 30% - 32% Co, 30% Ni, 28% - 30% Cr, 7% - 9% Al, 0,5% Y sowie ca. 0,7% Si (Angaben in Gewichtsprozent), welche auf den rostfreien Stahl IN 738 LC aufgetragen wurde. Die durchgezogene Linie stellt die Werte der Impedanz bei Kontakt der Erregerspule 3 mit der Oberfläche 10 der Schicht 1 dar. Die angegebenen Zahlenwerte stellen die mittels des Verfahrens bestimmte Dicke der Schicht in Mikrometern (um) dar. Die Schichtdicken konnten hierbei bis auf einen maximalen Fehler von 30 µm bestimmt werden. Mit den gestrichelten Linien ist für jede Schichtdicke der Wert der Impedanz bei Annäherung der Errgerspule 3 an die Schicht 1 dargestellt. Selbst diese Linien sind so deutlich voneinander zu unterscheiden, daß auch ohne direkten Kontakt der Erregerspule 3 mit der Schicht 1 bei Kenntnis des Abstandes der Erregerspule 3 von der Schicht 1 eine eindeutige Zuordnung der ermittelten Impedanzwerte zu der Dicke dᵣ der Schicht 1 möglich ist. Dies ist umso bemerkenswerter, da daß Verhältnis der elektrischen Leitfähigkeiten zwischen dem Grundwerkstoff 2 und der Schicht 1 nahe 1.0, insbesondere bei 0.75, liegt. Eine Bestimmung der Schichtdicke bei kaum voneinander verschiedenen Werte der elektrischen Leitfähigkeiten sind mit Frequenzen von 500 KHz oder darunter nicht mehr möglich, da die Meßsignale in dem Fehlerrauschen verschwinden.

Die Erfindung zeichnet sich durch ein Verfahren zur Bestimmung der Dicke einer elektrisch leitfähigen Schicht aus, wobei das zerstörungsfreie Wirbelstromprüfverfahren unter Auswahl einer besonders günstigen Frequenz durchgeführt wird. Die Auswahl der Frequenz zur Induzierung des Wirbelstroms in dem Bauteil, welches die Schicht enthält, erfolgt beispielsweise so, daß die Eindringtiefe des Wirbelstroms vorzugsweise geringfügig größer als die Dicke der Schicht ist. Hierdurch hat der Sprung der elektrischen Leitfähigkeit zwischen der Schicht und dem darunterliegenden Grundwerkstoff einen maßgeblichen Einfluß auf die Impedanz der Erregerspule, durch welche der Wirbelstrom in dem Bauteil erzeugt wird. Die zu erwartende Schichtdicke ist beispielsweise unmittelbar aus dem Herstellungsprozeß des Bauteils entnehmbar oder durch eine Testmessung mit gegebenenfalls unterschiedlichen Frequenzen bestimmbar. Vorzugsweise ist das Verfahren zur Kontrolle der Schichtdicke einer neu oder erneut beschichteten Gasturbinenschaufel, insbesondere einer Gasturbinenverdichterschaufel, geeignet.

## Patentansprüche

1. Verfahren zur Bestimmung der Dicke (dᵣ) einer Schutzschicht (1) mit einer elektrische Leitfähigkeit κ₁ eines Bauteils einer Turbinenanlage, welche Schutzschicht (1) auf einem Grundwerkstoff (2) des Bauteils mit der elektrischen Leitfähigkeit κ₂ aufgebracht ist, wobei die elektrischen Leitfähigkeiten κ₂ und **κ**₁ voneinander verschieden sind, bei dem
a) eine Erregerspule (3) von einem hochfrequenten elektrischen Strom durchflossen wird ,
b) die Erregerspule (3) der Schutzschicht (1) angenähert wird, so daß zumindest in der Schutzschicht (1) ein elektrischer Wirbelstrom erzeugt wird,
c) eine der Impedanz einer Prüfspule (9) zugeordnete Größe bestimmt wird, welche Größe nach dem Wirbelstromprüfprinzip als Grundlage für die Bestimmung der Dicke (dᵣ) der Schicht (1) dient und
d) die Frequenz (f) des hochfrequenten elektrischen Stroms so gewählt wird, daß gemäß dem Wirbelstromprüfprinzip eine eindeutige Bestimmung der Dicke (dᵣ) bei einem Verhältnis der elektrischen Leitfähigkeiten κ₂/κ₁ zwischen 0.7 und 1.5 erfolgt.

2. Verfahren nach Anspruch 1, wobei die Frequenz (f) so gewählt wird, daß die Eindringtiefe (d) des Wirbelsstroms größer als eine maximal zu erwartende Dicke (dₑ) der Schutzschicht (1) ist, insbesondere bis etwa dem Vierfachen der maximal zu erwartende Dicke (dₑ) beträgt.

3. Verfahren nach einem der vorhergehenden Ansprüche, wobei die Frequenz (f) des elektrischen Stroms zwischen 1,5 MHz und 3,5 MHz, insbesondere zwischen 2 MHz und 3 MHz, gewählt wird.

4. Verfahren nach einem der Ansprüche 1 bis 3, wobei die der Impedanz der Prüfspule (9) zugeordnete Größe bei einem mechanischen Kontakt der Erregerspule (3) mit der Schicht (1) bestimmt wird, wobei die Erregerspule (9) elektrisch gegenüber der Schicht (1) isoliert ist.

5. Verfahren nach einem der Ansprüche 1 bis 4, wobei mittels einer Testmessung mit einer vorgebbaren Testfrequenz (fₜ) näherungsweise die maximal zu erwartende Dicke (dₑ) bestimmt und daraus die Frequenz (f) unter Berücksichtigung der Leitfähigkeiten κ₂ und κ₁ abgeleitet wird.

6. Verfahren nach einem der Ansprüche 1 bis 5, wobei
a) ein Satz von als Probekörpern dienenden Bauteilen mit bekannter Schichtdicke bereitgestellt wird,
b) an jedem Probekörper mit einer Mehrzahl unterschiedlicher Näherungsfrequenzen (fₚ) eine der Impedanz der Prüfspule (9) zugeordnete Größe bestimmt wird, und
c) eine Näherungsfrequenz (fₚ₁) mit hinreichend hoher Auflösung und hoher Linearität in der der Impedanz zugeordneten Größe als die Frequenz (f) gewählt wird.

7. Verfahren nach Anspruch 6, wobei zur Auswahl der Näherungsfrequenzen (fₚ) mit einer Schicht (1) beschichtete Vorprobekörper, insbesondere einfacher Geometrie, bereitgestellt werden und mit einer Vielzahl von Testfrequenzen eine der Impedanz der Prüfspule (9) zugeordnete Größe bestimmt wird und aus den Testfrequenzen diejenigen mit bester Auflösung bestimmt und als die Näherungs frequenzen verwendet werden.

8. Verfahren nach einem der Ansprüche 1 bis 7, wobei die ermittelte der Impedanz der Prüfspule (9) zugeordnete Größe mit Referenzwerten verglichen und daraus die Dicke (dᵣ) der Schutzschicht (1) bestimmt wird.

9. Anwendung des Verfahrens nach einem der vorhergehenden Ansprüche bei einer Gasturbinenschaufel, mit der Schutzschicht (1) aus einer Legierung der Art MCrAlY, worin M für eines der Metalle Eisen, Nickel und/oder Kobalt oder einer Legierung daraus, Cr für Chrom, Al für Aluminium und Y für Yttrium, Hafnium oder einem ähnlichen Metall steht.

## Claims

1. Method for determining the thickness (dᵣ) of a protective layer (1) with an electrical conductivity κ₁ of a component of a turbine installation, which protective layer (1) has been applied to a base material (3) of the component with the electrical conductivity κ₂, the electrical conductivities κ₂ and κ₁ being different from each other, in which method
a) an excitation coil (3) is flowed through by a high-frequency electrical current,
b) the excitation coil (3) is brought up to the protective layer (1), so that an electrical eddy current is generated at least in the protective layer (1),
c) a value assigned to the impedance of a test coil (9) is determined, which value serves on the eddy current test principle as a basis for the determination of the thickness (dᵣ) of the layer (1) and
d) the frequency (f) of the high-frequency electrical current is chosen such that, according to the eddy current test principle, an unequivocal determination of the thickness (dᵣ) takes place when there is a ratio of the electrical conductivities κ₂/κ₁ between 0.7 and 1.5.

2. Method according to Claim 1, in which the frequency (f) is chosen such that the depth of penetration (d) of the eddy current is greater than a maximum thickness to be expected (dₑ) of the protective layer (1), in particular is up to four times the maximum thickness to be expected (dₑ).

3. Method according to one of the preceding claims, in which the frequency (f) of the electrical current is chosen between 1.5 MHz and 2.5 MHz, in particular between 2 MHz and 3 MHz.

4. Method according to one of Claims 1 to 3, in which the value assigned to the impedance of the test coil (9) is determined when there is a mechanical contact of the excitation coil (3) with the layer (1), the excitation coil (9) being electrically insulated with respect to the layer (1).

5. Method according to one of Claims 1 to 4, in which the maximum thickness to be expected (dₑ) is determined by approximation by means of a test measurement with a predeterminable test frequency (fₜ) and from this the frequency (f) is derived, taking into account the conductivities κ₂ and κ₁.

6. Method according to one of Claims 1 to 5, in which
a) a set of components serving as test bodies of a known layer thickness are prepared,
b) a value assigned to the impedance of the test coil (9) is determined on each test body with a plurality of different approximation frequencies (fₚ), and
c) an approximation frequency (fₚ₁) of adequately high resolution and high linearity in the value assigned to the impedance is chosen as the frequency (f).

7. Method according to Claim 6, in which, for selection of the approximation frequencies (fp), preliminary test bodies coated with a layer (1), in particular of simple geometry, are prepared and a value assigned to the impedance of the test coil (9) is determined with a multiplicity of test frequencies and, from the test frequencies, those with the best resolution are determined and used as the approximation frequencies.

8. Method according to one of Claims 1 to 7, in which the ascertained value assigned to the impedance of the test coil (9) is compared with reference values and, from this, the thickness (dᵣ) of the protective layer (1) is determined.

9. Use of the method according to one of the preceding claims in the case of a gas turbine blade, with the protective layer (1) of an alloy of the type MCrAlY, where M stands for one of the metals iron, nickel and/or cobalt or an alloy thereof, Cr stands for chromium, A1 stands for aluminium and Y stands for yttrium, hafnium or a similar metal.

## Revendications

1. Procédé de détermination de l'épaisseur (dᵣ) d'une couche (1) de protection ayant une conductivité κ₁ électrique d'un élément d'un système de turbine, la couche (1) de protection étant déposée sur un matériau (2) de base de l'élément ayant la conductivité κ₂ électrique, les conductivités κ₂ et κ₁ électriques étant différentes l'une de l'autre, qui consiste
a) à faire passer un courant électrique de haute fréquence dans une bobine (3) d'excitation,
b) à approcher la bobine (3) d'excitation de la couche (1) de protection de manière à produire un courant électrique de Foucault au moins dans la couche (1) de protection,
c) à déterminer l'impédance d'une grandeur associée à une bobine (9) de contrôle, cette grandeur servant, suivant le principe de contrôle par courant de Foucault, de base pour la détermination de l'épaisseur (dᵣ) de la couche (1) et
d) à choisir la fréquence (f) du courant électrique haute fréquence de façon à obtenir, suivant le principe de contrôle par courant de Foucault, une détermination univoque de l'épaisseur (dᵣ) pour un rapport des conductivités κ₂/κ₁ électriques compris entre 0,7 et 1,5.

2. Procédé suivant la revendication 1, **caractérisé en ce que** l'on choisit la fréquence (f) de façon à ce que la profondeur (d) de pénétration du courant de Foucault soit supérieure à une épaisseur (dₑ) maximum à laquelle on peut s'attendre de la couche (1) de protection, représentant notamment jusqu'à environ le quadruple de l'épaisseur (dₑ) maximum à laquelle on peut s'attendre.

3. Procédé suivant l'une des revendications précédentes, dans lequel on choisit la fréquence (f) du courant électrique entre 1,5 MHz et 3,5 MHz, notamment entre 2 MHz et 3 MHz.

4. Procédé suivant l'une des revendications 1 à 3, dans lequel on détermine l'impédance de la grandeur associée à la bobine (9) de contrôle lors d'un contact mécanique de la bobine (3) d'excitation avec la couche (1), la bobine (3) d'excitation étant isolée électriquement de la couche (1).

5. Procédé suivant l'une des revendications 1 à 4, dans lequel on détermine, au moyen d'une mesure d'essai à une fréquence (fₜ) d'essai qui peut être prescrite approximativement, l'épaisseur (dₑ) maximum à laquelle on peut s'attendre et on en déduit la fréquence (f) en tenant compte des conductivités κ₂ et κ₁.

6. Procédé suivant l'une des revendications 1 à 5, dans lequel
a) on met à disposition un jeu d'éléments servant d'éprouvettes d'épaisseur de couche connue,
b) on détermine sur chaque éprouvette, par une multiplicité de fréquences (fₚ) approximatives différentes, une grandeur associée à l'impédance de la bobine (9) de contrôle et
c) on choisit une fréquence (fₚ₁) approximative ayant une résolution suffisamment grande et une linéarité suffisamment grande de la grandeur associée à l'impédance comme fréquence (f).

7. Procédé suivant la revendication 6, dans lequel pour le choix des fréquences (fₚ) approximatives on prépare des pré-éprouvettes revêtues d'une couche (1), notamment de géométrie simple, et on détermine par une pluralité de fréquences d'essai une grandeur associée à l'impédance de la bobine (9) de contrôle et on détermine à partir des fréquences d'essai celle ayant la meilleure résolution et on l'utilise en tant que fréquence approximative.

8. Procédé suivant l'une des revendications 1 à 7, dans lequel on compare la grandeur déterminée associée à l'impédance de la bobine (9) de contrôle à des valeurs de référence et on en détermine l'épaisseur (dᵣ) de la couche (1) de protection.

9. Utilisation du procédé suivant l'une des revendications précédentes pour une aube de turbine à gaz ayant la couche (1) de protection en un alliage du type MCrAIY, M représentant l'un des métaux fer, nickel et/ou cobalt ou l'un de leurs alliages, Cr représentant le chrome, Al représentant l'aluminium et Y représentant l'yttrium, l'hafnium ou un métal analogue.
